# EUROPEAN PATENT SPECIFICATION

(11) **EP 4 036 265 B1**
(45) Date of publication and mention of the grant of the patent: **01.05.2024**
(21) Application number: 20867942.3
(22) Date of filing: 18.09.2020
(51) Int. Cl.: C21D 8/02, B23K 20/00, C21D 9/46, C22C 38/48, C22C 38/00, C22C 38/02, C22C 38/06, C22C 38/04, C22C 38/42, C22C 38/44, C22C 38/50

(54) **CLAD STEEL SHEET AND METHOD FOR MANUFACTURING SAME**
PLATTIERTES STAHLBLECH UND VERFAHREN ZUR HERSTELLUNG DAVON
TÔLE D'ACIER PLAQUÉE, ET PROCÉDÉ DE FABRICATION DE CELLE-CI

(30) Priority: 25.09.2019 JP 2019173657
(43) Date of publication of application: 03.08.2022
(73) Proprietor: JFE Steel Corporation, Tokyo 100-0011 (JP)
(72) Inventor: SAKAI, Ryosuke, Tokyo 100-0011 (JP); KURONUMA, Yota, Tokyo 100-0011 (JP); SHIMAMURA, Junji, Tokyo 100-0011 (JP)
(74) Representative: Grünecker Patent- und Rechtsanwälte PartG mbB
(86) International application number: PCT/JP2020/035404
(87) International publication number: WO 2021/060173

(56) References cited:
- WO-A1-2018/181381
- JP-A- H0 475 791
- JP-A- H0 475 791
- JP-A- H02 194 121

## Description

### Technical Field

The present invention relates to a clad steel plate used for, for example, coke drums, and a method for manufacturing the clad steel plate.

### Background Art

A clad steel plate is a steel plate made by bonding a cladding metal composed of a corrosion-resistant alloy to a steel plate of a base steel, such as carbon steel. Clad steel plates have both mechanical properties and corrosion resistance as structural members, and have the advantage of being less expensive than solid corrosion-resistant alloys. Consequently, clad steel plates have been widely used in industrial fields, mainly in shipbuilding, pressure vessels, and energy fields, and the demand for clad steel plates has been increasing due to the increasing number of cases in resource development with severe corrosive environments.

As a clad steel plate used for, for example, pressure vessels, a clad steel plate using a base metal, such as 1Cr-1/2Mo steel, having higher high-temperature strength than carbon steel (see, for example, Patent Literature 1), has been conventionally known. For coke drums used in a delayed coking process, 1·1/4Cr-1/2Mo steel or 1Cr-1/2Mo steel is used in many cases, and 1/2Mo steel is also used in some cases.

In coke drums, operation is performed at an operating temperature of about 440°C to about 500°C and an operating pressure of about 1 to about 7 kg/cm²G, and coke removal is performed at room temperature and atmospheric pressure. This cycle is repeated every 16 to 24 hours. The insides of coke drums are in H₂S environments; thus, 13Cr stainless steels, such as SUS405 and SUS410S, and Ni-based alloys, such as Alloy 625, are used as cladding metals as countermeasures against high-temperature sulfurization. Further clad steel plates and manufacturing methods thereof are disclosed in JP H04 75791 A and JP H02 194121 A.

### Citation List

### Patent Literature

PTL 1: Japanese Unexamined Patent Application Publication No. 2001-247915

### Summary of Invention

### Technical Problem

A base metal composed of 1/2Mo steel in a clad steel plate manufactured by normalizing heat treatment, as described above, has a dual-phase microstructure containing coarse ferrite and hard bainite. Thus, the base steel is known to have a significantly deteriorated toughness, making it difficult to achieve both high base steel strength and high base steel toughness.

The present invention has been developed in light of the current circumstances described above, and it is an object of the present invention to provide a clad steel plate having both high base steel strength and high base steel toughness, along with a method for manufacturing the clad steel plate.

### Solution to Problem

The present invention has been made to achieve the above-mentioned object, and is as described in the appended claims.

### Advantageous Effects of Invention

According to the clad steel plate of the present invention and the method for manufacturing the same, high base steel toughness can be ensured by setting the average grain size of ferrite to 15 µm or less at the 1/2 thickness position of the base steel plate in the thickness direction while ensuring high base steel strength by setting the area fraction of bainite to 20% or more.

### Description of Embodiments

Embodiments of the present invention will be described below. A clad steel has a structure in which a cladding metal is bonded to one or both sides of the base steel. Examples of the cladding metal include, but are not limited to, corrosion-resistant stainless steels and Ni-based alloys. Various alloys can be used in accordance with their applications. An example of the thickness of a clad steel plate is, but not limited to, about 70 mm. Usually, the thickness of the base steel plate is about 5 to about 66 mm, and the thickness of the cladding metal is about 1.5 to about 4.0 mm.

The chemical composition of the base steel plate of the clad steel plate of the present invention will be described. While all units in the chemical compositions are "mass%", the units are simply expressed by "%" unless otherwise specified.

The base steel plate has a chemical composition containing, by mass%, C: 0.120% to 0.180%, Si: 0.15% to 0.40%, Mn: 0.50% to 0.90%, P: 0.020% or less, S: 0.010% or less, Cu + Ni + Cr: 0.800% to 1.100% (where symbols of elements indicate amounts of the respective elements contained), Mo: 0.45% to 0.60%, Nb: 0.005% to 0.025%, Al: 0.005% to 0.050%, and N: 0.0010% to 0.0070%. The components in the chemical composition will be described in detail below.

### C: 0.120% to 0.180%

C is an element that contributes to precipitation strengthening in the form of carbides. A C content of less than 0.120% cannot result in sufficient base steel strength. A C content of more than 0.180% results in the precipitation of coarse carbides (cementite), thus causing deterioration in the toughness of the base steel and the welded heat affected zone. Accordingly, the C content is 0.120% to 0.180%. The upper limit is preferably 0.165%.

### Si: 0.15% to 0.40%

Si is an element that is added for deoxidization and to enhance the base steel strength through solid solution strengthening. At a Si content of less than 0.15%, these effects are not sufficiently provided. A Si content of more than 0.40% results in deterioration in the toughness of the base steel and the welded heat affected zone. Accordingly, the Si content is 0.15% to 0.40%. The lower limit is preferably 0.20%.

### Mn: 0.50% to 0.90%

Mn is an element that is added to improve hardenability to enhance the strength and toughness of the base steel. At a Mn content of less than 0.50%, the effect is not sufficiently provided. A Mn content of more than 0.90% results in the deterioration of weldability. Accordingly, the Mn content is 0.50% to 0.90%. The lower limit is preferably 0.70%.

### P: 0.020% or Less

P is an unavoidable impurity that deteriorates the toughness of the base steel. Accordingly, the P content is 0.020% or less, preferably 0.0080% or less.

### S: 0.010% or less

S is typically present in steel in the form of sulfide inclusions and deteriorates the toughness of the base steel. Accordingly, S is preferably minimized as much as possible. The S content is 0.010% or less, preferably 0.0050% or less.

### Mo: 0.45% to 0.60%

Mo contributes to an increase in the strength of the base steel plate through precipitation strengthening. At a Mo content of less than 0.45%, the effect is not sufficiently provided. A Mo content of more than 0.60% may result in deterioration in the toughness of the welded heat affected zone. Accordingly, when Mo is contained, the content is 0.45% to 0.60%. The lower limit is preferably 0.50%.

### Nb: 0.005% to 0.025%

Nb contributes to an increase in the strength of the base steel plate through precipitation strengthening and enhanced hardenability. Nb forms carbonitrides and contributes to an improvement in the toughness of the base steel by suppressing the coarsening of austenite due to the pinning effect of the carbonitrides. At a Nb content of less than 0.005%, the effect is not sufficiently provided. Accordingly, the Nb content is 0.005% or more, preferably 0.015% or more. A Nb content of more than 0.025% leads to the formation of a martensite-austenite constituent and coarse Nb carbonitrides, thereby deteriorating the toughness of the welded heat affected zone. Accordingly, the Nb content is 0.025% or less, preferably 0.020% or less.

### Al: 0.005% to 0.050%

Al is an element that suppresses the coarsening of austenite due to the pinning effect of nitrides and contributes to an improvement in the toughness of the base steel. Al is also an element that is added for deoxidization. At an Al content of less than 0.005%, these effects are not sufficiently provided. An Al content of more than 0.050% results in the formation of alumina clusters to deteriorate the ductility. Accordingly, the Al content is 0.005% to 0.050%. The lower limit is preferably 0.020%.

### N: 0.0010% to 0.0070%

A N content of 0.0010% or more results in suppression of austenite coarsening due to the pinning effect of nitrides, so that N contributes to an improvement in the toughness of the base steel and the welded heat affected zone. A N content of more than 0.0070% results in deterioration in the toughness of the welded heat affected zone. Accordingly, the N content is 0.0010% to 0.0070%. The lower limit is preferably 0.0020%.

### Cu + Ni + Cr: 0.800% to 1.100% (Where Symbols of Elements Indicate Amounts of Respective Elements Contained)

Cu, Ni, and Cr are all elements that improve hardenability and are added to enhance the strength and toughness of the base steel. When the total of the Cu, Ni, and Cr contents is less than 0.800%, a sufficient strength-toughness balance cannot be ensured. Accordingly, the total of the Cu, Ni, and Cr contents is 0.800% or more, preferably 0.950% or more. However, Cu, Ni, and Cr are expensive elements; thus, large amounts of them contained lead to an increase in cost. Accordingly, the total of the Cu, Ni, and Cr contents is 1.100% or less.

It is not necessary to contain all of the elements Cu, Ni and Cr. It is only necessary to contain any one or two of them to meet the total content. When Cu, Ni and Cr are all contained, Cu: 0.30% to 0.40%, Ni: 0.30% to 0.40%, and Cr: 0.20% to 0.30% may be contained. In the case of a Cu content of less than 0.30%, a Ni content of less than 0.30%, or a Cr content of less than 0.20%, a sufficient strength-toughness balance cannot be ensured. Thus, when Cu, Ni, and Cr are contained, the Cu content is 0.30% or more, preferably 0.35% or more, the Ni content is 0.30% or more, preferably 0.35% or more, and the Cr content is 0.20% or more, preferably 0.25% or more. However, Cu, Ni, and Cr are expensive elements; thus, large amounts of them contained lead to an increase in cost. Accordingly, when Cu, Ni, and Cr are contained, the Cu content is 0.40% or less, the Ni content is 0.40% or less, and the Cr content is 0.30% or less.

In addition to the above chemical composition, one or two or more of V: 0.005% to 0.030%, Ti: 0.005% to 0.030%, and Ca: 0.0005% to 0.0040% may be contained.

### V: 0.005% to 0.030%

V contributes to an increase in the strength of the base steel plate through precipitation strengthening. At a V content of less than 0.005%, the effect is not sufficiently provided. A V content of more than 0.030% results in deterioration in the toughness of the welded heat affected zone. Accordingly, when V is contained, the content is 0.005% to 0.030%. The lower limit is preferably 0.025%.

### Ti: 0.005% to 0.030%

A Ti content of 0.005% or more results in suppression of austenite coarsening due to the pinning effect of nitrides, and contributes to an improvement in the toughness of the base steel and the welded heat affected zone. Ti is an element effective in increasing the strength of the steel plate through precipitation strengthening. A Ti content of more than 0.030% results in coarsened nitrides that act as starting points for brittle fracture and ductile fracture. Accordingly, when Ti is contained, the content is 0.005% to 0.030%. The upper limit is preferably 0.020%.

### Ca: 0.0005% to 0.0040%

Ca acts to fix S in steel to improve the toughness of the base steel and HIC-resistance. To achieve this effect, Ca is preferably contained in an amount of 0.0005% or more. A Ca content of more than 0.0040% may result in the increase of inclusions in the steel to deteriorate the toughness of the base steel and the HIC-resistance. Accordingly, when Ca is contained, the content is 0.0005% to 0.0040%, more preferably 0.0020% to 0.0030%.

In the above base steel plate, the balance of the above chemical composition is Fe and unavoidable impurities. The unavoidable impurities refer to impurities that are present in raw materials or inevitably contained in the manufacturing process. The unavoidable impurities are essentially unnecessary, but are allowed to be contained because they are contained in trace amounts and do not affect the properties. The presence of the unavoidable impurities does not cause a noticeable change in the properties of the base steel. For example, it is acceptable to contain 0.003% or less oxygen (O).

The appropriate composition range of the base steel of the clad steel has been described above. In addition to the control of the chemical composition, the strength and toughness of the base steel can be improved through controlling the microstructure of the base steel plate. To ensure high strength of the base steel, the steel microstructure of the base steel plate is a microstructure containing bainite. Specifically, bainite has an area fraction of 20% or more at the 1/2 thickness position of the base steel plate in the thickness direction. To ensure high toughness of the base steel, it is effective to simultaneously reduce coarse carbides (cementite) that can be starting points of brittle cracks in the base steel plate and to refine the microstructure to increase resistance to brittle crack propagation. Specifically, ferrite has an average grain size of 15 µm or less at the 1/2 thickness position of the base steel plate in the thickness direction. The area fraction of bainite and the average grain size of ferrite will be separately described below.

### Area Fraction of Bainite at 1/2 Thickness Position of Base Steel Plate in Thickness Direction: 20% or More

The steel microstructure of the base steel plate needs to contain bainite from the viewpoint of ensuring high strength. Bainite effectively contributes to an improvement in the strength of the steel plate through transformation microstructure strengthening. Specifically, bainite has an area fraction of 20% or more of the entire steel microstructure at the 1/2 thickness position of the base steel plate in the thickness direction (hereinafter, referred to simply as a "1/2 thickness position"). The base steel plate only needs to contain 20% or more bainite in area fraction, may contain ferrite and bainite in a total area fraction of 100%, and may contain a steel microstructure other than ferrite or bainite.

The area fraction of bainite at the 1/2 thickness position is determined as described below. Specifically, the area fraction is determined by mirror-polishing an L-section (a cross-section parallel to the rolling direction and parallel to a direction normal to the rolling surface) of the base steel plate at the 1/2 thickness position in the thickness direction, performing etching with nital, observing a randomly selected 1.2 mm² area at a magnification of 100× with an optical microscope, and performing image analysis.

### Average Grain Size of Ferrite: 15 µm or Less

The crystal grain boundaries of ferrite provide resistance to brittle crack propagation; thus, a reduction in the size of the crystal grains contributes to an improvement in the toughness of the base steel. Accordingly, the average grain size of ferrite is 15 µm or less. The average grain size of ferrite is evaluated in accordance with JIS G 0551.

In the clad steel, the cladding metal bonded to the base steel plate is composed of, for example, a corrosion-resistant alloy. The corrosion-resistant alloy is preferably, but not necessarily, a stainless steel, such as SUS405 or SUS410S, or a Ni-based alloy.

To control the microstructure of the base steel plate as described above, it is important to appropriately control the chemical composition and manufacturing conditions, especially the normalizing heat treatment conditions after rolling. A method for manufacturing the above clad steel plate will be described. The method for manufacturing this clad steel plate includes heating a slab assembly in a surface temperature range of 1,050°C to 1,200°C, the slab assembly having been formed by stacking a base steel plate material having the foregoing chemical composition and a cladding metal material of a stainless steel or a Ni-based alloy, subjecting the heated slab assembly to rolling in a surface temperature range of 950°C or higher at a reduction ratio in accordance with the type of cladding metal, performing natural cooling to produce a rolled plate including the base steel plate and the cladding metal, and subjecting the rolled plate to normalizing heat treatment twice or more at a temperature of an Ac₃ transformation temperature or higher and 1,000°C or lower in terms of temperature at the 1/2 thickness position of the base steel plate in the thickness direction.

Here, the slab assembly is formed, for example, by stacking the base steel plate material and the cladding metal material, or by stacking the base steel plate material, the cladding metal material, the cladding metal material, and the base steel plate material in that order. When the cladding metals are stacked together, a separating agent is applied between the cladding metals in advance. After the completion of the normalizing heat treatment, the upper part and the lower part are peeled off to obtain clad steel plates, to be used as product plates, each including the cladding metal bonded to one side of the base steel plate. The slab assembly may be formed by subjecting the base steel plates to electron-beam welding or laser-beam welding together in an environment with a vacuum (negative pressure) of, for example, 10⁻⁴ torr or less, and temporarily attaching the base steel plate and the cladding metal.

### Heating at Slab Heating Temperature of 1,050°C to 1,200°C in Terms of Surface Temperature

A slab heating temperature of lower than 1,050°C causes a difficulty in ensuring the good bondability between the base steel plate and the cladding metal. A slab heating temperature of higher than 1,200°C results in coarsened austenite in the base steel plate to deteriorate the toughness. Accordingly, the slab heating temperature is 1,050°C to 1,200°C, preferably 1,050°C to 1,100°C.

### Rolling at Surface Temperature Range of 950°C or Higher at Reduction Ratio in Accordance with Type of Cladding Metal

A good bondability between the base steel plate and the cladding metal of the clad steel plate is ensured by rolling in the high-temperature range. Specifically, the rolling in the high-temperature range reduces the deformation resistance of the base steel plate and the cladding metal to form a good bonding interface. This facilitates the interdiffusion of elements at the bonding interface and ensures good bondability between the base steel plate and the cladding metal.

In view of the bondability between the base steel plate and the cladding metal, the reduction ratio is set in accordance with the type of cladding metal. When the cladding metal is a stainless steel, the reduction ratio needs to be 1.5 or more in the temperature range of 950°C or higher in terms of the surface temperature of the material to be rolled. Preferably, the reduction ratio is 2.0 or more in the temperature range of 1,000°C or higher in terms of the surface temperature.

When the cladding metal is a Ni-based alloy, the reduction ratio needs to be 2.0 or more in the temperature range of 950°C or higher in terms of the surface temperature of the material to be rolled. Preferably, the reduction ratio is 2.5 or more in the temperature range of 1,000°C or higher in terms of the surface temperature. Furthermore, when the cladding metal is a Ni-based alloy, a rolling finish temperature of lower than 800°C in terms of the surface temperature may result in the application of shear stress to the interface between the base steel and the cladding metal to deteriorate the bondability. Accordingly, the rolling finish temperature is 800°C or higher in terms of the surface temperature of the slab assembly.

### Normalizing Temperature: Normalizing Heat Treatment at Temperature of Ac₃ Transformation Temperature or Higher and 1,000°C or Lower in Terms of Temperature at 1/2 Thickness Position

After the above-mentioned clad rolling, the rolled plate is subjected to normalizing heat treatment by heating. The normalizing temperature used here refers to a temperature at the 1/2 thickness position of the base steel plate portion of the rolled plate in the thickness direction. A normalizing temperature of lower than the Ac₃ transformation temperature leads to incomplete austenite transformation to form a inhomogeneous final microstructure, thereby deteriorating the toughness of the base steel plate. A normalizing temperature of higher than 1,000°C results in the dissolution of Al nitrides and Nb carbonitrides, which act as austenite pinning, to coarsen the austenite and deteriorate the toughness of the base steel plate. Accordingly, the normalizing temperature is the Ac₃ transformation temperature or higher and 1,000°C or lower, preferably 900°C to 1,000°C. The Ac₃ transformation temperature can be determined by equation (1) below. Ac3 (°C) = 912.0-230.5 × C + 31.6 × Si-20.4 × Mn-39.8 × Cu-18.1 × Ni-14.8 × Cr + 16.8 × Mo ··· (1) where the element symbol in equation (1) above indicates the amount (mass %) of each element contained, and is set to zero if the relevant element is not contained.

### Number of Times of Normalizing Heat Treatment: Two or More

Ferrite in the final microstructure is refined by increasing nucleation sites for ferrite transformation due to austenite refinement during the normalizing heat treatment. The grain size of austenite at the time of heating during the normalizing heat treatment is affected by the grain size of the microstructure before the normalizing heat treatment and the dispersion state of precipitates during the normalizing heat treatment. A finer microstructure before the normalizing heat treatment, a larger amount of the precipitates, and a smaller size of the precipitates result in finer austenite at the time of heating during the normalizing heat treatment. As mentioned above, rolling at a high temperature is necessary to ensure good bonding between the cladding metal and the base steel in the clad steel plate. The microstructure of the base steel before the normalizing heat treatment is likely to be coarser than the microstructure of a solid material manufactured by using carbon steel alone instead of cladding the base steel. Thus, by performing the normalizing heat treatment twice or more, there is no remarkable change in the dispersion state of the precipitates, but finer ferrite in the final microstructure is formed owing to the finer microstructure before the normalizing heat treatment, thereby ensuring the toughness of the base steel. For this reason, the number of times of the normalizing heat treatment is two or more. The relationship between the heating temperatures during each normalizing heat treatment process is not restricted, and may be selected as appropriate.

### EXAMPLE 1

In Example 1, base steel plate materials having chemical compositions given in Table 1 were produced. A cladding metal was a SUS410S stainless steel. In Tables 1 to 3, underlined portions indicate that the material is outside the scope of the present invention, and "-" indicates that the material is not contained or is contained as an unavoidable impurity.

**[Table 1]**

| Base steel No. | Chemical composition of base steel plate (mass%) | | | | | | | | | | | | | | | | | Remarks |
|---|---|---|---|---|---|---|---|---|---|---|---|---|---|---|---|---|---|---|
| | C | Si | Mn | P | S | Al | Nb | Ti | N | Cu | Ni | Cr | Mo | V | Ca | O | Cu + Ni + Cr | |
| A1 | 0.162 | 0.26 | 0.85 | 0.007 | 0.002 | 0.028 | 0.020 | - | 0.0034 | 0.35 | 0.35 | 0.275 | 0.55 | 0.025 | - | 0.0020 | 0.975 | Acceptable steel |
| A2 | 0.100 | 0.27 | 0.30 | 0.008 | 0.003 | 0.029 | 0.019 | - | 0.0036 | 0.34 | 0.33 | 0.271 | 0.21 | 0.021 | - | 0.0022 | 0.941 | Comparative steel |
| A3 | 0.120 | 0.39 | 0.89 | 0.006 | 0.002 | 0.028 | 0.020 | - | 0.0038 | 0.39 | 0.40 | 0.296 | 0.59 | 0.029 | - | 0.0018 | 1.086 | Acceptable steel |
| A4 | 0.160 | 0.15 | 0.55 | 0.006 | 0.002 | 0.029 | 0.020 | 0.008 | 0.0060 | 0.40 | 0.39 | 0.296 | 0.60 | 0.028 | 0.0018 | 0.0020 | 1.086 | Acceptable steel |
| A5 | 0.150 | 0.25 | 0.87 | 0.007 | 0.001 | 0.028 | 0.010 | - | 0.0034 | 0.40 | 0.40 | 0.296 | 0.58 | 0.029 | - | 0.0017 | 1.096 | Acceptable steel |
| A6 | 0.160 | 0.26 | 0.89 | 0.007 | 0.002 | 0.028 | 0.020 | - | 0.0034 | 0.31 | 0.32 | 0.296 | 0.59 | 0.029 | - | 0.0019 | 0.926 | Acceptable steel |
| A7 | 0.161 | 0.26 | 0.90 | 0.006 | 0.001 | 0.030 | 0.020 | - | 0.0040 | 0.40 | 0.40 | 0.210 | 0.46 | 0.029 | - | 0.0020 | 1.010 | Acceptable steel |
| A8 | 0.162 | 0.26 | 0.89 | 0.007 | 0.002 | 0.028 | 0.020 | - | 0.0034 | 0.40 | 0.40 | 0.296 | 0.60 | - | - | 0.0019 | 1.096 | Acceptable steel |
| A9 | 0.251 | 0.65 | 0.81 | 0.007 | 0.002 | 0.029 | 0.006 | - | 0.0034 | 0.35 | 0.35 | 0.275 | 0.55 | 0.025 | - | 0.0019 | 0.975 | Comparative steel |
| A10 | 0.241 | 0.26 | 0.82 | 0.007 | 0.002 | 0.028 | 0.020 | - | 0.0034 | 0.20 | 0.15 | 0.150 | 0.54 | - | - | 0.0018 | 0.500 | Comparative steel |
| A11 | 0.163 | 0.25 | 0.84 | 0.007 | 0.002 | - | - | - | 0.0010 | 0.36 | 0.34 | 0.273 | 0.55 | 0.025 | - | 0.0020 | 0.973 | Comparative steel |
| A12 | 0.162 | 0.26 | 0.85 | 0.007 | 0.002 | 0.028 | 0.020 | - | 0.0034 | 0.29 | 0.39 | 0.29 | 0.55 | 0.025 | - | 0.0020 | 0.970 | Acceptable steel |

The base steel plate materials having the chemical compositions (the balance being Fe and unavoidable impurities) given in Table 1 and the cladding metal materials (SUS410S) were stacked to form slab assemblies. The slab assemblies were heated under the conditions given in Table 2 and then subjected to rolling to produce rolled plates. Each of the resulting rolled plates was subjected to normalizing heat treatment under the conditions given in Table 2 to produce a clad steel plate having a thickness of 69 mm (the thickness of the base steel plate: 65 mm, and the thickness of the cladding metal: 4 mm). When the normalizing heat treatment was performed twice, the normalizing temperature was set to the same temperature for the first and second times.

**[Table 2]**

| Manufacturing condition No. | Slab heating | Clad rolling | | Normalizing heat treatment | |
|---|---|---|---|---|---|
| | Slab heating temperature (°C) | Reduction ratio at 950°C or higher | Rolling finish temperature (°C) | Normalizing temperature (°C) | Number of times of normalizing heat treatment |
| C1 | 1170 | 3.0 | 940 | 910 | 2 |
| C2 | 1050 | 3.0 | 900 | 970 | 2 |
| C3 | 1170 | 2.0 | 940 | 910 | 2 |
| C4 | 1170 | 2.0 | 820 | 910 | 2 |
| C5 | 1170 | 3.0 | 940 | 870 | 2 |
| C6 | 1300 | 3.0 | 940 | 910 | 1 |
| C7 | 1170 | 1.7 | 940 | 910 | 2 |
| C8 | 1170 | 3.0 | 940 | 800 | 2 |
| C9 | 1170 | 3.0 | 940 | 1050 | 2 |
| C10 | 1170 | 2.0 | 780 | 910 | 2 |
| C11 | 1000 | 1.25 | 900 | 910 | 2 |
| C12 | 1170 | 3.0 | 940 | 910 | 1 |
| C13 | 1300 | 3.0 | 940 | 910 | 2 |

Each of the clad steel plates thus produced was subjected to a tensile test in accordance with JIS Z2241 (test specimen shape: No. 4, test specimen collection position: 1/2 thickness position, test specimen collection direction: C-direction, test temperature: room temperature) and the Charpy impact test in accordance with JIS Z2242 (notch shape: V-notch, test specimen collection position: 1/2 thickness position, test specimen collection direction: C-direction) to determine the yield strength (YS), the tensile strength (TS), and the ductile-to-brittle transition temperature (vTrs). In this context, that the test specimen collection position for the tensile test and the Charpy impact test is the 1/2 thickness position indicates that the test specimen collection position is the 1/2 thickness position of the base steel plate.

The shear test in accordance with JIS G0601 was performed to determine the shear strength of the bonding interface between the base steel plate and the cladding metal, and the bondability between the base steel plate and the cladding metal was evaluated. The bondability was evaluated as good when the shear strength of the bonding interface was 300 MPa or more. Using the methods described above, the steel microstructure was identified, the area fraction of each phase was calculated, and the average grain size of ferrite was calculated. Table 3 presents these results.

**[Table 3]**

| No. | Base steel No. | Manufacturing condition No. | Steel microstructure of base steel plate | | Evaluation result | | | | | | | | Remarks |
|---|---|---|---|---|---|---|---|---|---|---|---|---|---|
| | | | Area fraction of bainite at 1/2 thickness position (%) | Average grain size of ferrite at 1/2 thickness position (µm) | After normalizing heat treatment | | | After PWHT (640°C-3 hr) | | After PWHT (640°C-21 hr) | | | |
| | | | | | YS (MPa) | TS (MPa) | Shear strength at bonding interface (MPa) | YS (MPa) | TS (MPa) | YS (MPa) | TS (MPa) | vTrs (°C) | |
| 1 | A1 | C1 | 29 | 13 | 341 | 613 | 380 | 413 | 572 | 408 | 555 | -15 | Inventive example |
| 2 | A2 | C1 | 18 | 15 | 240 | 495 | 371 | 313 | 456 | 305 | 435 | -20 | Comparative example |
| 3 | A3 | C1 | 25 | 12 | 351 | 604 | 373 | 422 | 568 | 418 | 545 | -20 | Inventive example |
| 4 | A4 | C1 | 30 | 13 | 322 | 581 | 366 | 396 | 545 | 389 | 521 | -19 | Inventive example |
| 5 | A5 | C1 | 29 | 15 | 332 | 605 | 375 | 403 | 565 | 399 | 541 | -11 | Inventive example |
| 6 | A6 | C1 | 30 | 13 | 342 | 609 | 381 | 414 | 577 | 407 | 555 | -14 | Inventive example |
| 7 | A7 | C1 | 30 | 14 | 331 | 607 | 360 | 400 | 568 | 393 | 550 | -15 | Inventive example |
| 8 | A8 | C1 | 31 | 13 | 338 | 613 | 362 | 411 | 575 | 403 | 554 | -19 | Inventive example |
| 9 | A9 | C1 | 42 | 13 | 394 | 712 | 349 | 461 | 673 | 456 | 651 | 10 | Comparative example |
| 10 | A10 | C1 | 41 | 14 | 343 | 612 | 370 | 414 | 572 | 407 | 551 | 11 | Comparative example |
| 11 | A11 | C1 | 38 | 18 | 317 | 566 | 376 | 392 | 527 | 381 | 519 | 5 | Comparative example |
| 12 | A1 | C2 | 31 | 15 | 341 | 616 | 313 | 412 | 574 | 407 | 552 | -11 | Inventive example |
| 13 | A1 | C3 | 30 | 13 | 342 | 612 | 348 | 416 | 575 | 404 | 551 | -15 | Inventive example |
| 14 | A1 | C4 | 31 | 12 | 343 | 614 | 300 | 418 | 576 | 408 | 553 | -18 | Inventive example |
| 15 | A1 | C5 | 30 | 13 | 342 | 612 | 382 | 414 | 573 | 407 | 552 | -15 | Inventive example |
| 16 | A1 | C6 | 27 | 17 | 344 | 612 | 380 | 415 | 571 | 400 | 553 | 1 | Comparative example |
| 17 | A1 | C7 | 30 | 12 | 346 | 617 | 308 | 418 | 580 | 409 | 554 | -17 | Inventive example |
| 18 | A1 | C8 | 31 | 13 | 340 | 607 | 376 | 412 | 568 | 401 | 543 | 2 | Comparative example |
| 19 | A1 | C9 | 30 | 19 | 341 | 610 | 376 | 414 | 575 | 404 | 552 | 8 | Comparative example |
| 20 | A1 | C10 | 30 | 12 | 347 | 616 | 312 | 413 | 572 | 406 | 558 | -18 | Inventive example |
| 21 | A1 | C11 | 29 | 13 | 348 | 614 | 196 | 412 | 572 | 408 | 555 | -16 | Comparative example |
| 22 | A1 | C12 | 28 | 16 | 343 | 612 | 380 | 414 | 571 | 405 | 554 | -1 | Comparative example |
| 23 | A1 | C13 | 29 | 16 | 344 | 611 | 385 | 415 | 571 | 404 | 553 | -2 | Comparative example |
| 24 | A12 | C1 | 29 | 13 | 341 | 614 | 381 | 414 | 574 | 409 | 555 | -16 | Inventive example |

Regarding evaluation criteria, the clad steel plates each having a tensile strength (TS) of TS ≥ 515 [MPa] (after the normalizing heat treatment, after PWHT 640°C-3 hr, and after PWHT 640°C-21 hr), a yield strength (YS) of YS ≥ 295 [MPa] (after the normalizing heat treatment, after PWHT 640°C-21 hr), a yield strength of YS ≥ 390 [MPa] (after PWHT 640°C-3 hr), and a ductile-to-brittle transition temperature vTrs < -10 [°C] (after PWHT 640°C-21 hr) at the 1/2 thickness position of the base steel plate in the thickness direction were evaluated as satisfying the properties (base steel strength and base steel toughness) required for clad steel plates for pressure vessels, such as coke drums, used at, for example, 300°C or higher.

The results demonstrated that the clad steel plates of the inventive examples in Table 3 all satisfied the above-mentioned strength and toughness of the base steels and had good bondability. In Comparative example No. 2, the C, Mn, and Mo contents of the base steel plate were lower than the appropriate ranges; thus, the amount of bainite formed during cooling was also small, thus failing to obtain the desired tensile properties. In Comparative example No. 9, the C content and the Si content of the base steel plate were more than the appropriate ranges, thus failing to obtain the desired toughness of the base steel. In Comparative example No. 10, the C content of the base steel plate was more than the appropriate range, and the total of the Cu, Ni, and Cr contents was less than the appropriate range, thus failing to obtain the desired toughness of the base steel.

In Comparative example No. 11, the Al, Nb, and N contents were less than the appropriate ranges, thus failing to obtain the desired toughness of the base steel. In Comparative example No. 16, the slab heating temperature was higher than the appropriate range, and the number of times of the normalizing heat treatment was less than the appropriate range, thus failing to obtain the desired toughness of the base steel. In Comparative example No. 18, the normalizing temperature was lower than the appropriate range, thus failing to obtain the desired toughness of the base steel. In Comparative example No. 19, the normalizing temperature was higher than the appropriate range, thus failing to obtain the desired properties of the base steel. In Comparative example No. 21, the slab heating temperature and the reduction ratio at 950°C or higher were lower than the appropriate ranges, thus failing to the desired bonding between the base steel plate and the cladding metal. In Comparative example No. 22, the number of times of the normalizing heat treatment process was less than the appropriate range, thus failing to obtain the desired toughness of the base steel. In Comparative example No. 23, the slab heating temperature was higher than the appropriate range, thus failing to obtain the desired toughness of the base steel. As described above, when the stainless steel was used as the cladding metal, it was possible to improve the strength and toughness of the base steel of the clad steel plate by controlling the chemical composition and the steel microstructure of the base steel plate.

### EXAMPLE 2

In Example 2, base steel plate materials having the same chemical compositions as in Example 1 given in Table 1 above were produced. Cladding metal materials were composed of Alloy 625, which is a Ni-based alloy.

The base steel plate materials having the chemical compositions (the balance being Fe and unavoidable impurities) given in Table 1 and the cladding metal materials were stacked to form slab assemblies by the foregoing method. The slab assemblies were subjected to rolling under the conditions given in Table 4 to produce rolled plates. Each of the resulting rolled plates was subjected to normalizing heat treatment under the conditions given in Table 4 to produce a clad steel plate having a thickness of 69 mm (the thickness of the base steel plate: 65 mm, and the thickness of the cladding metal: 4 mm). When the normalizing heat treatment was performed twice, the normalizing temperature was set to the same temperature for the first and second times.

**[Table 4]**

| Manufacturing condition No. | Slab heating | Clad rolling | | Normalizing heat treatment | |
|---|---|---|---|---|---|
| | Slab heating temperature (°C) | Reduction ratio at 950°C or higher | Rolling finish temperature (°C) | Normalizing temperature (°C) | Number of times of normalizing heat treatment |
| C14 | 1170 | 3.0 | 940 | 910 | 2 |
| C15 | 1050 | 3.0 | 900 | 970 | 2 |
| C16 | 1170 | 2.0 | 940 | 910 | 2 |
| C17 | 1170 | 2.0 | 820 | 910 | 2 |
| C18 | 1170 | 3.0 | 940 | 870 | 2 |
| C19 | 1300 | 3.0 | 940 | 910 | 1 |
| C20 | 1000 | 1.5 | 900 | 910 | 2 |
| C21 | 1170 | 3.0 | 940 | 800 | 2 |
| C22 | 1170 | 3.0 | 940 | 1050 | 2 |
| C23 | 1170 | 2.0 | 770 | 910 | 2 |
| C24 | 1170 | 3.0 | 940 | 910 | 1 |
| C25 | 1300 | 3.0 | 940 | 910 | 2 |

Each of the clad steel plates thus produced was subjected to the same evaluation tests as in Example 1 to determine the yield strength (YS), the tensile strength (TS), the ductile-to-brittle transition temperature (vTrs), and the shear strength of the bonding interface. Table 5 presents these results.

**[Table 5]**

| No. | Base steel No. | Manufacturing condition No. | Steel microstructure of base steel plate | | Evaluation result | | | | | | | | Remarks |
|---|---|---|---|---|---|---|---|---|---|---|---|---|---|
| | | | Area fraction of bainite at 1/2 thickness position (%) | Average grain size of ferrite at 1/2 thickness position (µm) | After normalizing heat treatment | | | After PWHT (640°C-3 hr) | | After PWHT (640°C-21 hr) | | | |
| | | | | | YS (MPa) | TS (MPa) | Shear strength at bonding interface (MPa) | YS (MPa) | TS (MPa) | YS (MPa) | TS (MPa) | vTrs (°C) | |
| 25 | A1 | C14 | 30 | 13 | 342 | 612 | 382 | 414 | 574 | 406 | 552 | -15 | Inventive example |
| 26 | A2 | C14 | 18 | 15 | 241 | 494 | 375 | 314 | 456 | 306 | 434 | -20 | Comparative example |
| 27 | A3 | C14 | 25 | 12 | 352 | 605 | 376 | 424 | 567 | 417 | 545 | -20 | Inventive example |
| 28 | A4 | C14 | 30 | 13 | 323 | 582 | 365 | 395 | 544 | 388 | 522 | -19 | Inventive example |
| 29 | A5 | C14 | 29 | 15 | 333 | 604 | 380 | 403 | 566 | 399 | 543 | -11 | Inventive example |
| 30 | A6 | C14 | 30 | 13 | 341 | 610 | 382 | 413 | 575 | 407 | 554 | -14 | Inventive example |
| 31 | A7 | C14 | 30 | 14 | 330 | 607 | 370 | 401 | 569 | 393 | 549 | -15 | Inventive example |
| 32 | A8 | C14 | 31 | 13 | 337 | 612 | 366 | 410 | 576 | 402 | 554 | -19 | Inventive example |
| 33 | A9 | C14 | 42 | 13 | 392 | 713 | 357 | 463 | 674 | 455 | 652 | 10 | Comparative example |
| 34 | A10 | C14 | 40 | 14 | 342 | 612 | 381 | 414 | 574 | 406 | 552 | 11 | Comparative example |
| 35 | A11 | C14 | 38 | 18 | 316 | 565 | 378 | 392 | 527 | 380 | 518 | 5 | Comparative example |
| 36 | A1 | C15 | 31 | 15 | 340 | 614 | 312 | 410 | 575 | 405 | 553 | -11 | Inventive example |
| 37 | A1 | C16 | 30 | 13 | 344 | 614 | 352 | 415 | 576 | 406 | 553 | -15 | Inventive example |
| 38 | A1 | C17 | 30 | 12 | 345 | 615 | 301 | 417 | 576 | 407 | 554 | -18 | Inventive example |
| 39 | A1 | C18 | 30 | 13 | 341 | 611 | 381 | 413 | 574 | 406 | 551 | -15 | Inventive example |
| 40 | A1 | C19 | 27 | 17 | 343 | 611 | 386 | 414 | 571 | 402 | 551 | 1 | Comparative example |
| 41 | A1 | C20 | 30 | 12 | 345 | 616 | 246 | 417 | 578 | 408 | 552 | -17 | Comparative example |
| 42 | A1 | C21 | 31 | 13 | 339 | 609 | 378 | 410 | 569 | 401 | 546 | 2 | Comparative example |
| 43 | A1 | C22 | 30 | 19 | 341 | 610 | 376 | 414 | 575 | 404 | 552 | 8 | Comparative example |
| 44 | A1 | C23 | 30 | 12 | 346 | 616 | 202 | 417 | 577 | 408 | 556 | -18 | Comparative example |
| 45 | A1 | C24 | 28 | 16 | 342 | 612 | 380 | 413 | 572 | 406 | 553 | -1 | Comparative example |
| 46 | A1 | C25 | 29 | 16 | 344 | 612 | 385 | 415 | 571 | 403 | 553 | -2 | Comparative example |
| 47 | A12 | C14 | 29 | 13 | 342 | 612 | 381 | 413 | 575 | 409 | 556 | -16 | Inventive example |

The same evaluation criteria as in Example 1 above were used to evaluate the strength and toughness of the base steel and the bondability between the base steel plate and the cladding metal. It can be seen that each of the clad steel plates of the inventive examples in Table 5 satisfies the above-mentioned criteria of the yield strength (YS), the tensile strength (TS), the ductile-to-brittle transition temperature (vTrs), and the shear strength of the bonding interface.

In Comparative example No. 26, since the C, Mn, and Mo contents of the base steel plate were lower than the appropriate ranges, the amount of bainite formed during cooling was also small, thus failing to obtain the desired tensile properties. In Comparative example No. 33, the C and Si contents of the base steel plate were more than the appropriate ranges, thus failing to obtain the desired toughness of the base steel. In Comparative example No. 34, the C content of the base steel plate was more than the appropriate range, and the total of the Cu, Ni, and Cr contents was less than the appropriate range, thus failing to obtain the desired toughness of the base steel. In Comparative example No. 35, the Al, Nb, and N contents were less than the appropriate ranges, thus failing to obtain the desired toughness of the base steel.

In Comparative example No. 40, the slab heating temperature was higher than the appropriate range, and the number of times of the normalizing heat treatment was less than the appropriate range, thus failing to obtain the desired toughness of the base steel. In Comparative example No. 41, the slab heating temperature and the reduction ratio at 950°C or higher were lower than the appropriate ranges, thus failing to obtain the desired bonding between the base steel plate and the cladding metal. In Comparative example No. 42, the normalizing temperature was lower than the appropriate range, thus failing to obtain the desired toughness of the base steel. In Comparative example No. 43, the normalizing temperature was higher than the appropriate range, thus failing to obtain the desired properties of the base steel. In Comparative example No. 44, the rolling finish temperature was lower than the appropriate range, thus failing to obtain the desired bonding between the base steel plate and the cladding metal. In Comparative example No. 45, the number of times of the normalizing heat treatment was less than the appropriate range, thus failing to obtain the desired toughness of the base steel. In Comparative example No. 46, the slab heating temperature was higher than the appropriate range, thus failing to obtain the desired toughness of the base steel. As described above, when the Ni-based alloy was used as the cladding metal, it was possible to improve the strength and toughness of the base steel of the clad steel plate by controlling the chemical composition and the steel microstructure of the base steel plate.

## Claims

1. A clad steel plate, comprising a cladding metal bonded to a base steel plate,
wherein the base steel plate has a chemical composition containing, by mass%:
C: 0.120% to 0.180%,
Si: 0.15% to 0.40%,
Mn: 0.50% to 0.90%,
P: 0.020% or less,
S: 0.010% or less,
Mo: 0.45% to 0.60%,
Nb: 0.005% to 0.025%,
Al: 0.005% to 0.050%, and
N: 0.0010% to 0.0070%, and further containing Cu, Ni, and Cr in a range satisfying:
Cu + Ni + Cr: 0.800% to 1.100%, where symbols of elements indicate amounts of the respective elements contained, optionally, by mass%, one or two or more selected from V: 0.005% to 0.030%, Ti: 0.005% to 0.030%, and Ca: 0.0005% to 0.0040%, the balance being Fe and unavoidable impurities, and
bainite has an area fraction of 20% or more at a 1/2 thickness position of the base steel plate in a thickness direction, and ferrite has an average grain size of 15 µm or less at the 1/2 thickness position of the base steel plate in the thickness direction, wherein the average grain size of ferrite is evaluated in accordance with JIS G 0551.

2. The clad steel plate according to Claim 1, wherein the chemical composition of the base steel plate further contains, by mass%,
Cu: 0.30% to 0.40%,
Ni: 0.30% to 0.40%, and
Cr: 0.20% to 0.30%.

3. The clad steel plate according to Claim 1 or 2, wherein the cladding metal is a stainless steel.

4. The clad steel plate according to Claim 1 or 2, wherein the cladding metal is a Ni-based alloy.

5. A method for manufacturing the clad steel plate according to claim 1 or 2, comprising:
heating a slab assembly in a surface temperature range of 1,050°C to 1,200°C, the slab assembly having been formed by assembling a base steel plate material having the chemical composition of the base steel plate according to claim 1 or 2 and a cladding metal material according to Claim 3;
subjecting the heated slab assembly to rolling in a surface temperature range of 950°C or higher at a reduction ratio of 1.5 or more to produce a rolled plate; and
subjecting the rolled plate to normalizing heat treatment twice or more at a temperature of an Ac₃ transformation temperature or higher and 1,000°C or lower in terms of temperature at a 1/2 thickness position of the base steel plate in a thickness direction, wherein the Ac₃ transformation temperature is determined by the following equation (1): Ac3 (°C) = 912.0-230.5 × C + 31.6 × Si-20.4 × Mn-39.8 × Cu-18.1 × Ni-14.8 × Cr + 16.8 × Mo

6. A method for manufacturing the clad steel plate according to claim 1 or 2, comprising:
heating a slab assembly in a surface temperature range of 1,050°C to 1,200°C, the slab assembly having been formed by assembling a base steel plate material having the chemical composition of the base steel plate according to claim 1 or 2 and a cladding metal material according to Claim 4;
subjecting the heated slab assembly to rolling in a surface temperature range of 950°C or higher at a reduction ratio of 2.0 or more to produce a rolled plate, wherein a rolling finish temperature is 800°C or higher in terms of a surface temperature of the slab assembly; and
subjecting the rolled plate to normalizing heat treatment twice or more at a temperature of an Ac₃ transformation temperature or higher and 1,000°C or lower in terms of temperature at a 1/2 thickness position of the base steel plate in a thickness direction, wherein the Ac₃ transformation temperature is determined by the following equation (1): Ac3 (°C) = 912.0-230.5 × C + 31.6 × Si-20.4 × Mn-39.8 × Cu-18.1 × Ni-14.8 × Cr + 16.8 × Mo

7. The method for manufacturing a clad steel plate according to Claim 5 or 6, wherein the slab assembly is formed by stacking the base steel plate material, the cladding metal material, the cladding metal material, and the base steel plate material in that order, or by stacking the base steel plate material and the cladding metal material.

## Patentansprüche

1. Plattiertes Stahlblech, umfassend ein Plattierungsmetall, das mit einem Grundstahlblech verbunden ist,
wobei das Grundstahlblech eine chemische Zusammensetzung aufweist, die in Masse-% enthält:
C: 0,120 % bis 0,180 %,
Si: 0,15 % bis 0,40 %,
Mn: 0,50 % bis 0,90 %,
P: 0,020 % oder weniger,
S: 0,010 % oder weniger,
Mo: 0,45 % bis 0,60 %,
Nb: 0,005 % bis 0,025 %,
AI: 0,005 % bis 0,050 % und
N: 0,0010% bis 0,0070%, und weiterhin enthaltend Cu, Ni und Cr in einem Bereich, der folgende Bedingungen erfüllt:
Cu + Ni + Cr: 0,800 % bis 1,100 %, wobei die Symbole der Elemente die Mengen der jeweiligen enthaltenen Elemente angeben,
gegebenenfalls, in Masse-%, ein oder zwei oder mehr ausgewählt aus V: 0,005 % bis 0,030 %, Ti: 0,005 % bis 0,030 % und Ca: 0,0005 % bis 0,0040 %, wobei der Rest Fe und unvermeidliche Verunreinigungen sind und
Bainit einen Flächenanteil von 20 % oder mehr an einer 1/2-Dickenposition des Grundstahlblechs in einer Dickenrichtung aufweist, und Ferrit eine durchschnittliche Korngröße von 15 µm oder weniger an der 1/2-Dickenposition des Grundstahlblechs in der Dickenrichtung aufweist, wobei die durchschnittliche Korngröße von Ferrit gemäß JIS G 0551 bewertet wird.

2. Plattiertes Stahlblech gemäß Anspruch 1, wobei die chemische Zusammensetzung des Stahlgrundblechs ferner in Masse-% enthält:
Cu: 0,30 % bis 0,40 %,
Ni: 0,30 % bis 0,40 % und
Cr: 0,20 % bis 0,30 %.

3. Plattiertes Stahlblech gemäß Anspruch 1 oder 2, wobei das Plattierungsmetall ein rostfreier Stahl ist.

4. Plattiertes Stahlblech gemäß Anspruch 1 oder 2, wobei das Plattierungsmetall eine auf Ni basierende Legierung ist.

5. Verfahren zum Herstellen des plattierten Stahlblechs gemäß Anspruch 1 oder 2, umfassend:
Erwärmen eines Brammenaufbaus in einem Oberflächentemperaturbereich von 1.050 °C bis 1.200 °C, wobei der Brammenaufbau durch Zusammenfügen eines Grundstahlblechmaterials mit der chemischen Zusammensetzung des Grundstahlblechs gemäß Anspruch 1 oder 2 und eines Plattierungsmetallmaterials gemäß Anspruch 3 gebildet wurde,
Unterziehen der erwärmten Brammenanordnung einem Walzen in einem Oberflächentemperaturbereich von 950 °C oder höher bei einem Reduktionsverhältnis von 1,5 oder mehr, um ein gewalztes Blech herzustellen und
Unterziehen des gewalzten Blechs einer Wärmebehandlung durch Normalglühen, zweimal oder öfter, bei einer Temperatur einer Ac₃-Umwandlungstemperatur oder höher und 1.000 °C oder niedriger in Bezug auf die Temperatur an einer 1/2-Dickenposition des Grundstahlblechs in einer Dickenrichtung, wobei die Ac₃-Umwandlungstemperatur durch die folgende Gleichung (1) bestimmt wird: Ac3 (°C) = 912,0-230,5 × C + 31,6 × Si-20,4 × Mn-39,8 × Cu-18,1 × Ni-14,8 × Cr+ 16,8 × Mo

6. Verfahren zum Herstellen des plattierten Stahlblechs gemäß Anspruch 1 oder 2, umfassend:
Erwärmen eines Brammenaufbaus in einem Oberflächentemperaturbereich von 1.050 °C bis 1.200 °C, wobei der Brammenaufbau durch Zusammenfügen eines Grundstahlblechmaterials mit der chemischen Zusammensetzung des Grundstahlblechs gemäß Anspruch 1 oder 2 und eines metallischen Plattierungsmaterials gemäß Anspruch 4 gebildet wurde,
Unterziehen der erwärmten Brammenanordnung einem Walzen in einem Oberflächentemperaturbereich von 950 °C oder höher bei einem Reduktionsverhältnis von 2,0 oder mehr, um ein gewalztes Blech zu erzeugen, wobei eine Fertigwalztemperatur 800 °C oder höher ist, bezogen auf eine Oberflächentemperatur der Brammenanordnung, und Unterziehen des gewalzten Blechs einer Wärmebehandlung durch Normalglühen, zweimal oder öfter, bei einer Temperatur einer Ac₃-Umwandlungstemperatur oder höher und 1.000 °C oder niedriger in Bezug auf die Temperatur an einer 1/2-Dickenposition des Grundstahlblechs in einer Dickenrichtung, wobei die Ac₃-Umwandlungstemperatur durch die folgende Gleichung (1) bestimmt wird: Ac3 (°C) = 912,0-230,5 × C + 31,6 × Si-20,4 × Mn-39,8 × Cu-18,1 × Ni-14,8 × Cr+ 16,8 × Mo

7. Verfahren zum Herstellen eines plattierten Stahlblechs gemäß Anspruch 5 oder 6, wobei der Brammenaufbau durch Stapeln des Grundstahlblechmaterials, des Plattierungsmetallmaterials, des Plattierungsmetallmaterials und des Grundstahlblechmaterials in dieser Reihenfolge oder durch Stapeln des Grundstahlblechmaterials und des Plattierungsmetallmaterials gebildet wird.

## Revendications

1. Plaque d'acier plaquée, comprenant un métal de placage lié à une plaque d'acier de base,
dans laquelle la plaque d'acier de base a une composition chimique contenant, en % en masse :
C: 0,120 % à 0,180 %,
Si : 0,15 % à 0,40 %,
Mn : 0,50 % à 0,90 %,
P : 0,020 % ou moins,
S : 0,010 % ou moins,
Mo : 0,45 % à 0,60 %,
Nb : 0,005 % à 0,025 %,
Al : 0,005 % à 0,050 %, et
N : 0,0010 % à 0,0070 %, et contenant en outre Cu, Ni et Cr dans une plage satisfaisant à :
Cu + Ni + Cr : 0,800 % à 1,100 %, où les symboles des éléments indiquent les quantités des éléments respectifs présents,
éventuellement, en % en masse, un ou deux éléments ou plus choisis parmi V : 0,005 % à 0,030 %, Ti : 0,005 % à 0,030 % et Ca : 0,0005 % à 0,0040 %, le reste étant du Fe et des impuretés inévitables, et
la bainite a une fraction surfacique de 20 % ou plus à une position de mi-épaisseur de la plaque d'acier de base dans un sens épaisseur, et la ferrite présente une grosseur de grain moyenne de 15 µm ou moins à la position de mi-épaisseur de la plaque d'acier de base dans le sens épaisseur, la grosseur de grain moyenne de la ferrite étant évaluée conformément à la JIS G 0551.

2. Plaque d'acier plaquée selon la revendication 1, dans laquelle la composition chimique de la plaque d'acier de base contient en outre, en % en masse,
Cu : 0,30 % à 0,40 %,
Ni : 0,30 % à 0,40 %, et
Cr : 0,20 % à 0,30 %.

3. Plaque d'acier plaquée selon la revendication 1 ou 2, dans laquelle le métal de placage est un acier inoxydable.

4. Plaque d'acier plaquée selon la revendication 1 ou 2, dans laquelle le métal de placage est un alliage à base de Ni.

5. Procédé de fabrication de la plaque d'acier plaquée selon la revendication 1 ou 2, comprenant :
le chauffage d'un assemblage de brames dans une plage de température superficielle de 1050 °C à 1200 °C, l'assemblage de brames ayant été formé par assemblage d'un matériau de plaque d'acier de base ayant la composition chimique de la plaque d'acier de base selon la revendication 1 ou 2 et d'un matériau métallique de placage selon la revendication 3 ;
la soumission de l'assemblage de brames chauffé à un laminage dans une plage de température superficielle de 950°C ou plus à un taux de réduction de 1,5 ou plus afin de produire une plaque laminée ; et
la soumission de la plaque laminée à un traitement thermique de normalisation deux fois ou plus à une température supérieure ou égale à une température de transformation Acs et inférieure ou égale à 1000 °C en termes de température à une position de mi-épaisseur de la plaque d'acier de base dans un sens épaisseur, la température de transformation Ac₃ étant déterminée par l'équation (1) suivante : Ac3 (°C) = 912,0-230,5 × C + 31,6 × Si-20,4 × Mn-39,8 × Cu-18,1 × Ni- 14,8 × Cr+ 16,8 × Mo

6. Procédé de fabrication de la plaque d'acier plaquée selon la revendication 1 ou 2, comprenant :
le chauffage d'un assemblage de brames dans une plage de température superficielle de 1050 °C à 1200 °C, l'assemblage de brames ayant été formé par assemblage d'un matériau de plaque d'acier de base ayant la composition chimique de la plaque d'acier de base selon la revendication 1 ou 2 et d'un matériau métallique de placage selon la revendication 4 ;
la soumission de l'assemblage de brames chauffé à un laminage dans une plage de température superficielle de 950°C ou plus à un taux de réduction de 2,0 ou plus afin de produire une plaque laminée, une température de finissage de laminage étant supérieure ou égale à 800 °C en termes de température superficielle de l'assemblage de brames ; et
la soumission de la plaque laminée à un traitement thermique de normalisation deux fois ou plus à une température supérieure ou égale à une température de transformation Ac₃ et inférieure ou égale à 1000 °C en termes de température à une position de mi-épaisseur de la plaque d'acier de base dans un sens épaisseur, la température de transformation Ac₃ étant déterminée par l'équation (1) suivante : Ac3 (°C) = 912,0-230,5 × C + 31,6 × Si-20,4 × Mn-39,8 ×Cu-18,1 × Ni- 14,8 × Cr+16,8 × Mo

7. Procédé de fabrication d'une plaque d'acier plaquée selon la revendication 5 ou 6, dans lequel l'assemblage de brames est formé par empilement du matériau de plaque d'acier de base, du matériau métallique de placage, du matériau métallique de placage et du matériau de plaque d'acier de base, dans cet ordre, ou par empilement du matériau de plaque d'acier de base et du matériau métallique de placage.
